# FASCICULE DE BREVET EUROPEEN

(11) **EP 3 154 660 B1**
(45) Date de publication et mention de la délivrance du brevet: **08.04.2020**
(21) Numéro de dépôt: 15753075.9
(22) Date de dépôt: 12.06.2015
(51) Int. Cl.: B01D 46/52, B01D 46/00

(54) **PROCÉDÉ ET DISPOSITIF DE FABRICATION D'UN ÉLÉMENT FILTRANT POUR FILTRE À AIR**
VERFAHREN UND VORRICHTUNG ZUR HERSTELLUNG EINES FILTERELEMENTS FÜR EINEN LUFTFILTER
METHOD AND DEVICE FOR MANUFACTURE OF A FILTERING ELEMENT FOR AN AIR FILTER

(30) Priorité: 12.06.2014 FR 1455358
(43) Date de publication de la demande: 19.04.2017
(73) Titulaire: NOVARES France, 92140 Clamart (FR)
(72) Inventeur: BAZIN, Jean-Pierre, 80800 Villers Bretonneux (FR); POINGT, Francis, 80800 Fouilloy (FR); RODRIGUES, Samya, 80118 Le Quesnel (FR)
(74) Mandataire: Delorme, Nicolas
(86) Numéro de dépôt international: PCT/FR2015/051568
(87) Numéro de publication internationale: WO 2015/189532

(56) Documents cités:
- FR-A1- 2 997 868
- US-A- 3 870 495
- US-A1- 2008 107 765

## Description

La présente invention concerne un procédé de fabrication d'éléments filtrant pour filtre à air, notamment destiné pour un moteur à combustion. De plus, la présente invention propose un dispositif destiné à la fabrication d'éléments filtrant pour filtre à air, permettant la mise en œuvre du procédé de fabrication de l'invention.

Une des problématiques actuelles de l'industrie automobile est de minimiser l'encombrement des organes fonctionnels, notamment sous le capot moteur. Dans la chaine de conception des organes sous le capot moteur, les filtres à air sont généralement conçus dans la dernière phase de sorte que leur géométrie doit être adaptée à la géométrie du volume libre restant. Ainsi, les éléments filtrants conçus traditionnellement selon une forme parallélépipédique doivent de plus en plus souvent se conformer à des volumes aux géométries complexes, parfois curvilignes, non symétriques, etc... tout en proposant la même capacité de filtration que les filtres aux volumes traditionnels.

On connait par le document US 2008107765 A1 un procédé et un dispositif de fabrication de filtre de forme irrégulière par un poste de découpe en fin de fabrication.

Il existe donc un besoin de fabriquer des éléments filtrant selon une méthode et des moyens permettant d'obtenir des géométries complexes d'élément filtrant.

Selon un premier aspect, l'invention concerne un procédé de fabrication d'éléments filtrant pour filtre à air, le procédé comprenant les étapes suivantes :
a) Guider une nappe de média filtrant selon une direction d'avancement, la nappe comprenant deux bords longitudinaux et une pluralité de lignes de préformage transversales aux bords longitudinaux,
b) Prévoir un premier galet d'écrasement et un second galet d'écrasement de la nappe, le premier galet et le second galet étant déplaçables de façon indépendante dans une direction transversale à la direction d'avancement de la nappe et,
c) Commander de manière indépendante le déplacement transversal du premier galet d'écrasement et le déplacement transversal du second galet d'écrasement de sorte qu'au cours de l'avancement de la nappe, le premier galet d'écrasement forme une première série de zones embossées à l'intersection avec une ligne de préformage sur deux et que le second galet d'écrasement forme une deuxième série de zones embossées sur chaque ligne de préformage présentant une zone embossée de la première série,

Prévoir une première buse de colle et une seconde buse de colle, la première buse de colle et la seconde buse de colle étant déplaçables de façon indépendante dans une direction transversale à la direction d'avancement de la nappe,
e) Déposer sur la nappe de média filtrant un premier cordon de colle reliant les zones embossées de la première série et un second cordon de colle reliant les zones embossées de la deuxième série,
f) Plisser la nappe de média filtrant selon chacune des lignes de préformage de manière à former une pièce plissée comprenant alternativement des plis hauts et des plis bas, les plis hauts successifs étant jointoyés par la première série de zones embossées formant un profil latéral d'au moins un élément filtrant et par la seconde série de zones embossées et la succession des plis bas formant respectivement un premier plan et un second plan parallèles au plan de la nappe guidée à l'étape a),
g) Réaliser une découpe de séparation de la pièce plissée dans une direction transversale à la direction d'avancement, pour séparer de façon unitaire des éléments filtrant.

L'invention permet ainsi de réaliser des éléments filtrant dont les profils latéraux sont paramétrables indépendamment l'un de l'autre et qui peuvent prendre des géométries variées.

Selon un mode particulier de réalisation de ce procédé de fabrication, il est envisage que le premier et le second galets d'écrasement soient positionnés sur la même ligne transversale à la direction d'avancement de la nappe, cette disposition simplifiant la mise en œuvre du procédé.

De plus, il est prévu que le procédé comprenne une étape de réalisation d'une découpe de détourage de la pièce plissée en suivant le profil latéral de sorte à détourer au moins un élément filtrant.

De préférence, la nappe de média filtrant est en matériau synthétique.

Il peut être prévu que, avant l'étape c) le procédé comprenne une étape ii) consistant à chauffer localement la première série de zones embossées et les zones embossées de la deuxième série de la nappe de média filtrant.

Selon un deuxième aspect, l'invention concerne un dispositif destiné à la fabrication d'éléments filtrant, le dispositif comprenant un dispositif de guidage configuré pour guider une nappe de média filtrant comportant une pluralité de lignes de préformage selon une direction d'avancement,
- un premier galet d'écrasement et un second galet d'écrasement déplaçables de façon indépendante et transversalement à la direction d'avancement, le premier galet d'écrasement et le second galet d'écrasement étant configurés respectivement pour former une première série de zones embossées à l'intersection avec une ligne de préformage sur deux et de sorte que le second galet d'écrasement forme une deuxième série de zones embossées sur chaque ligne de préformage présentant une zone embossée de la première série,
- un premier organe de dépôt d'un premier cordon de colle et un second organe de dépôt d'un second cordon de colle, configurés pour déposer respectivement un premier cordon de colle sur au moins la première série de zones embossées de la nappe et un second cordon de colle sur au moins la deuxième série de zones embossées de la nappe,
- au moins une vis sans fin configurée pour plisser la nappe de média filtrant le long de chaque ligne de préformage,
- une première buse de colle (12a) et une seconde buse de colle (12b), la première buse de colle (12a) et la seconde buse de colle (12b) étant déplaçables de façon indépendante dans une direction transversale à la direction d'avancement de la nappe (2),
- une unité de commande du premier galet d'écrasement et du second galet d'écrasement configurée pour piloter de façon indépendante le déplacement transversal du galet d'écrasement et le déplacement transversal du second galet selon respectivement un premier profil latéral d'au moins un élément filtrant et un second profil latéral d'au moins un élément filtrant.

De plus, en outre en amont des premiers et seconds galets d'écrasement dans la direction d'avancement de la nappe, deux rouleaux de marquage sont configurés pour former la pluralité de lignes de préformage.

Le dispositif comprend, en outre, un premier organe de chauffage et un deuxième organe de chauffage disposés en amont des premiers et seconds galets d'écrasement selon la direction d'avancement de la nappe, le premier organe de chauffage et le deuxième organe de chauffage étant configurés pour être déplaçables de manière indépendante et transversalement à la direction d'avancement et pour chauffer localement la première série et la deuxième série de zones embossées selon respectivement le premier profil latéral et le deuxième profil latéral.

Il est prévu que l'unité de commande soit configurée pour piloter le déplacement simultané des premier et deuxième organes de chauffage, des premier et second galets d'écrasement et des premiers et seconds organes de dépôt des premiers et seconds cordons de colle selon respectivement le premier profil latéral et le second profil latéral.

Pour sa bonne compréhension, l'invention est décrite en référence aux figures ci-annexées représentant, à titre d'exemple non limitatif, une forme de réalisation d'un procédé de fabrication d'un élément filtrant selon l'invention.
La figure 1 est une vue en perspective représentant de manière schématique la mise en œuvre du procédé selon l'invention.
Les figures 2 et 3 montrent en vue de dessus, de manière schématique, un élément filtrant en cours de fabrication.

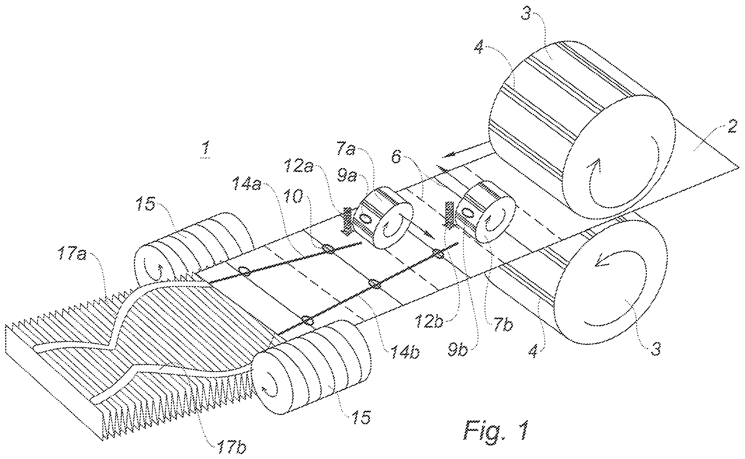

La figure 1 représente un dispositif de fabrication d'un élément filtrant selon l'invention et le déroulement du procédé de fabrication d'un filtre notamment pour véhicule automobile.

Le dispositif 1 sur lequel est mis en œuvre le procédé selon l'invention présente une série de postes permettant de mettre en forme une nappe 2 d'un média filtrant en matière synthétique non tissée pour lui donner, comme on va le voir, une forme quelconque.

La matière initiale qui va constituer l'élément filtrant 19 est une nappe 2 de média filtrant. Il s'agit préférentiellement de matériau fibreux synthétique non tissé. La nappe 2 de média filtrant est conditionnée en rouleau qui est déroulé en amont du dispositif selon l'invention. La nappe 2 de média filtrant se présente sous la forme d'une laize possédant deux bords longitudinaux.

La nappe 2 de média filtrant est entrainée dans une direction d'avancement par deux rouleaux de marquage 3 superposés. En plus d'assurer la traction de la nappe 2 de média filtrant, les rouleaux 3 sont pourvus de nervures 4 qui forment, dans le média filtrant, des lignes de préformage 6 transversales selon un pas régulier. Par ligne de préformage, on entend un façonnage du média filtrant qui consiste à refouler la matière constituant le média sur une ligne de pliure pour faciliter son pliage ultérieur.

Bien que ce ne soit pas représenté sur la figure 1, il est prévu qu'un chauffage soit exercé sur la nappe 2 de média filtrant.

En aval du point de chauffage, comme on peut le voir sur la figure 1, le dispositif est doté de deux galets d'écrasement 7a et 7b ; ces derniers possèdent des surépaisseurs 9a, 9b disposées selon un pas régulier.

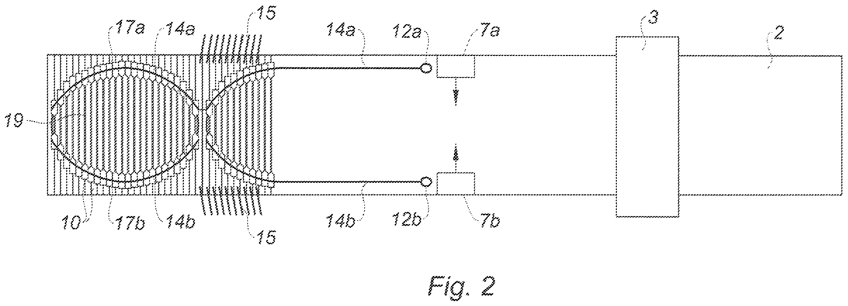

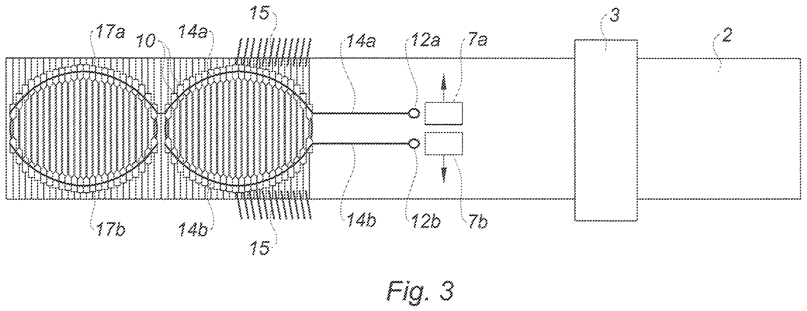

La figure 1 montre une forme de réalisation de l'invention dans laquelle les premier et deuxième galets d'entrainement sont décalés dans le sens longitudinal tandis que les figures 2 et 3 montrent des formes de réalisation dans laquelle les premier et deuxième galets d'entrainement sont alignés sur une même ligne transversale

Les galets d'écrasement 7a et 7b viennent former une première et une deuxième séries de zones embossées 10a et 10b à l'intersection d'une ligne de préformage 6 sur deux. Par zone embossée, on entend une zone qui a subi une déformation permanente créée par les surépaisseurs 9a, 9b.

Le premier et le second galet d'écrasement 7a et 7b sont commandés de manière indépendante par un système de vérins ou vis sans fin électrique, hydraulique ou pneumatique qui permet de les positionner sur une cote transversale de la nappe 2 de média filtrant comme le montrent les flèches transversales des figures 1 à 3.

Pour cela, le dispositif 1 comprend une unité de commande comprenant notamment une interface de pilotage et une unité de calcul qui permet de piloter notamment la position transversale des galets d'écrasement 7a et 7b mais également la vitesse de rotation des rouleaux 3 ainsi que les autres équipements du dispositif.

Directement en aval de chacun des galets d'écrasement 7a et 7b, on note la présence de buses de colle 12.

Le dispositif 1 comprend donc une première buse de colle 12a et une seconde buse de colle 12b et de manière analogue au système de pilotage des galets d'écrasement 7a et 7b, le dispositif 1 permet de positionner chacune des buses de colle 12a et 12b à une cote transversale à la nappe 2 de média filtrant. Les premières et secondes buses de colle 12a et 12b peuvent être liées respectivement aux premiers et seconds galets d'écrasement 7a et 7b et appartenir au même appareillage de pilotage.

Ainsi, comme on peut le voir sur la figure 1, les cordons de colle 14a et 14b qui sont déposés par la première et la seconde buse de colle 12 présentent des directions divergentes par rapport aux bords longitudinaux de la nappe 2 de média filtrant.

Le premier cordon de colle 14a relie les zones embossées 10a de la première série de zones embossées et le second cordon de colle 14b relient les zones embossées 10b de la deuxième série. Toute géométrie peut être donnée aux deux séries de zones embossées 10a et 10b et aux deux cordons de colle 14a et 14b qui les relient.

La nappe 2 de média filtrant qui, jusqu'à maintenant, se présente sous une forme plane va subir une opération de mise en accordéon qui est réalisée par deux vis sans fin 15 pour former une pièce plissée 5 à partir de laquelle plusieurs éléments filtrants 19 seront séparés et détourés.

Le plissage de la nappe 2 de média filtrant s'effectue selon chacune des lignes de préformage 6 de manière à obtenir alternativement des plis hauts et des plis bas. Les plis hauts successifs sont jointoyés par la première série de zones embossées 10 pour former un profil latéral 17a, 17b d'au moins un élément filtrant 19 et par la seconde série de zones embossées 10 ; la succession des plis bas forme respectivement un premier plan et un second plan parallèles au plan de la nappe 2.

Par convention sur la figure 1, les lignes de préformage 6 qui vont se trouver sur la face supérieure de l'élément filtrant 19 sont représentées en traits continus tandis que les lignes de préformage 6 qui vont former les plis qui se trouvent sur la face inférieure de l'élément filtrant 19 sont représentées en lignes pointillées.

De façon originale et spécifique à l'invention, on constate que, au cours de la formation de plis, les zones embossées 10 formées par les premiers et seconds galets d'écrasement 7a et 7b vont former des ponts de matière sur la face supérieure de l'élément filtrant 19 et vont présenter des profils latéraux 17 entièrement paramétrables puisque ces profils 17 sont formés par le pilotage des galets d'écrasement 7 et des buses de colle 12.

Dans l'exemple montré aux figues 2 et 3, on voit que les galets d'écrasement 7a et 7b et les buses de colle 12a et 12b ont formé des ponts de matière et un cordon de colle 14 qui confèrent à l'élément filtrant 19 des profils latéraux 17a, 17b ayant un contour sensiblement en hyperbole.

Il s'agit là bien entendu d'un exemple de réalisation parmi d'autres, sachant que toute autre forme notamment curviligne peut être obtenue.

La pièce plissée 5 qui est donc obtenue de manière continue est ensuite découpée pour former des éléments filtrant 19 unitaires qui pourront être utilisés dans les véhicules.

L'opération de découpe se fait en deux temps qui consistent à réaliser et à réaliser une découpe de séparation de la pièce plissée définissant plusieurs éléments filtrants 19 pour séparer de façon unitaire chacun des éléments filtrants et une découpe de détourage de la pièce plissée, en suivant le bord extérieur des cordons de colle 14 ou autrement dit le long des profils latéraux 17. Ces deux opérations peuvent être réalisées simultanément ou successivement dans l'ordre qui vient d'être décrit ou dans l'ordre inverse.

Bien entendu, l'invention n'est pas limitée à la forme de réalisation décrite ci-dessus mais elle en embrasse au contraire toutes les formes de réalisation.

## Revendications

1. Procédé de fabrication d'éléments filtrant (19) pour filtre à air, le procédé comprenant les étapes suivantes :
a) Guider une nappe (2) de média filtrant selon une direction d'avancement, la nappe (2) comprenant deux bords longitudinaux et une pluralité de lignes de préformage (6) transversales aux bords longitudinaux,
b) Prévoir un premier galet d'écrasement (7a) et un second galet d'écrasement (7) de la nappe (2), le premier galet (7a) et le second galet (7b) étant déplaçables de façon indépendante dans une direction transversale à la direction d'avancement de la nappe (2) et,
c) Commander de manière indépendante le déplacement transversal du premier galet d'écrasement (7a) et le déplacement transversal du second galet d'écrasement (7b) de sorte qu'au cours de l'avancement de la nappe (2), le premier galet d'écrasement (7a) forme une première série de zones embossées (10a) à l'intersection avec une ligne de préformage (6) sur deux et que le second galet d'écrasement (7b) forme une deuxième série de zones embossées (10b) sur chaque ligne de préformage (6) présentant une zone embossée (10a) de la première série,
d) Prévoir une première buse de colle (12a) et une seconde buse de colle (12b), la première buse de colle (12a) et la seconde buse de colle (12b) étant déplaçables de façon indépendante dans une direction transversale à la direction d'avancement de la nappe (2),
e) Déposer sur la nappe (2) de média filtrant un premier cordon de colle (14a) reliant les zones embossées (10a) de la première série et un second cordon de colle (14) reliant les zones embossées (10b) de la deuxième série,
f) Plisser la nappe (2) de média filtrant selon chacune des lignes de préformage (6) de manière à former une pièce plissée (5) comprenant alternativement des plis hauts et des plis bas, les plis hauts successifs étant jointoyés par la première série de zones embossées (10a) formant un profil latéral (17) d'au moins un élément filtrant (19) et par la seconde série de zones embossées (10b) et la succession des plis bas formant respectivement un premier plan et un second plan parallèles au plan de la nappe (2) guidée à l'étape a),
g) Réaliser une découpe de séparation de la pièce plissée (5) dans une direction transversale à la direction d'avancement, pour séparer de façon unitaire des éléments filtrant (19).

2. Procédé selon la revendication 1, **caractérisé en ce que** le premier galet d'écrasement (7a) et le second galet d'écrasement (7) sont positionnés sur une même ligne transversale à la direction d'avancement de la nappe.

3. Procédé selon l'une des revendications 1 à 2, **caractérisé en ce que** le procédé comprend l'étape de réaliser une découpe de détourage de la pièce plissée (5) en suivant le profil latéral (17) de sorte à détourer au moins un élément filtrant (19).

4. Procédé selon l'une des revendications 1 à 3, dans lequel la nappe (2) de média filtrant est en matériau synthétique.

5. Procédé selon l'une des revendications 1 à 4, comprenant avant l'étape c) une étape ii) consistant à chauffer localement les zones embossées (10) de la première et de la seconde série de la nappe (2) de média filtrant.

6. Dispositif destiné à la fabrication d'un élément filtrant (19), le dispositif comprenant
- un dispositif de guidage configuré pour guider une nappe (2) de média filtrant comportant une pluralité de rainages selon une direction d'avancement,
- un premier galet d'écrasement (7a) et un second galet d'écrasement (7) déplaçables de façon indépendante et transversalement à la direction d'avancement, le premier galet d'écrasement (7a) et le second galet d'écrasement (7) étant configurés respectivement pour former une première série de zones embossées (10a) à l'intersection avec une ligne de préformage (6) sur deux et de sorte que le second galet d'écrasement (7) forme une deuxième série de zones embossées (10) sur chaque ligne de préformage (6) présentant une zone embossée (10b) de la première série,
- un premier organe de dépôt d'un premier cordon de colle (14a) et un second organe de dépôt d'un second cordon de colle (14b), configurés pour déposer respectivement un premier cordon de colle (14a) sur au moins la première série de zones embossées (10) de la nappe (2) et un second cordon de colle (14b) sur au moins la deuxième série de zones embossées (10) de la nappe (2),
- au moins une vis sans fin (15) configurée pour plisser la nappe (2) de média filtrant le long de chaque ligne de préformage (6),
- une première buse de colle (12a) et une seconde buse de colle (12b), la première buse de colle (12a) et la seconde buse de colle (12b) étant déplaçables de façon indépendante dans une direction transversale à la direction d'avancement de la nappe (2),
- une unité de commande du premier galet d'écrasement (7a) et du second galet d'écrasement (7b) configurée pour piloter de façon indépendante le déplacement transversal du premier galet d'écrasement (7a) et le déplacement transversal du second galet d'écrasement (7b) selon respectivement un premier profil latéral (17a) d'au moins un élément filtrant (19) et un second profil latéral (17b) d'au moins un élément filtrant (19).

7. Dispositif selon la revendication 6, comprenant en outre en amont des premier et second galets d'écrasement (7a,7b) dans la direction d'avancement de la nappe (2), deux rouleaux de marquage (3) superposés configurés pour former la pluralité de lignes de préformage (6).

8. Dispositif selon l'une des revendications 6 ou 7, comprenant en outre un premier organe de chauffage et un deuxième organe de chauffage disposés en amont des premiers et seconds galets d'écrasement (7a,7b) selon la direction d'avancement de la nappe (2), le premier organe de chauffage et le deuxième organe de chauffage étant configurés pour être déplaçables de manière indépendante et transversalement à la direction d'avancement et pour chauffer localement la première série de zones embossées (10a) et la seconde série de zones embossées (10b) selon respectivement le premier profil latéral (17a) et le deuxième profil latéral (17b).

9. Dispositif selon l'une des revendications 6 à 8 dans lequel l'unité de commande est configurée pour piloter le déplacement simultané des premiers et deuxièmes organes de chauffage, des premiers et seconds galets d'écrasement (7a,7b) et des premières et secondes buses (12) de dépôt des premiers et seconds cordons de colle (14a,14b) selon respectivement le premier profil latéral et le deuxième profil latéral.

## Patentansprüche

1. Verfahren zur Herstellung von Filterelementen (19) für einen Luftfilter, wobei das Verfahren die folgenden Schritte umfasst:
a) Führen einer Filtermedienmatte (2) in einer Vorschubrichtung, wobei die Matte (2) zwei Längsränder und eine Vielzahl von zu den Längsrändern querlaufenden Vorformlinien (6) umfasst,
b) Vorsehen einer ersten Quetschrolle (7a) und einer zweiten Quetschrolle (7) der Matte (2), wobei die erste Rolle (7a) und die zweite Rolle (7b) unabhängig in einer zur Vorschubrichtung der Matte (2) querlaufenden Richtung verschiebbar sind, und
c) Unabhängiges Steuern der querlaufenden Verschiebung der ersten Quetschrolle (7a) und der querlaufenden Verschiebung der zweiten Quetschrolle (7b), sodass im Laufe des Vorschubs der Matte (2) die erste Quetschrolle (7a) eine erste Reihe von geprägten Zonen (10a) an der Kreuzungsstelle mit jeder zweiten Vorformlinie (6) bildet, und die zweite Quetschrolle (7b) eine zweite Reihe von geprägten Zonen (10b) an jeder Vorformlinie (6) bildet, die eine geprägten Zone (10a) der ersten Reihe aufweist,
d) Vorsehen einer ersten Kleberdüse (12a) und einer zweiten Kleberdüse (12b), wobei die erste Kleberdüse (12a) und die zweite Kleberdüse (12b) unabhängig in einer zu der Vorschubrichtung der Matte (2) querlaufenden Richtung verschiebbar sind,
e) Abscheiden auf der Filtermedienmatte (2) einer ersten Kleberraupe (14a), die die geprägten Zonen (10a) der ersten Reihe verbindet, und einer zweiten Kleberraupe (14), die die geprägten Zonen (10b) der zweiten Reihe verbindet,
f) Falten der Filtermedienmatte (2) gemäß jeder der Vorformlinien (6) um ein gefaltetes Teil (5) zu bilden, das abwechselnd obere Falten und untere Falten umfasst, wobei die aufeinanderfolgenden oberen Falten durch die erste Reihe geprägter Zonen (10a), die ein Seitenprofil (17) mindestens eines Filterelements (19) bilden, und durch die zweite Reihe geprägter Zonen (10b) zusammengefügt werden und die Aufeinanderfolge der unteren Falten jeweils eine erste Ebene und eine zweite Ebene parallel zur Ebene der im Schritt a) geführten Matte (2) bilden,
g) Durchführen eines Trennschnitts des gefalteten Teils (5) in einer zu der Vorschubrichtung querlaufenden Richtung, um die Filterelemente (19) einheitlich zu trennen.

2. Verfahren nach Anspruch 1, **dadurch gekennzeichnet, dass** die erste Quetschrolle (7a) und die zweite Quetschrolle (7) auf einer selben, zu der Vorschubrichtung der Matte querlaufenden Linie positioniert sind.

3. Verfahren nach einem der Ansprüche 1 bis 2, **dadurch gekennzeichnet, dass** das Verfahren den Schritt des Durchführens eines Ausschneidens des gefalteten Teils (5) umfasst, indem man dem Seitenprofil (17) folgt, um mindestens ein Filterelement auszuschneiden.

4. Verfahren nach einem der Ansprüche 1 bis 3, wobei die Filtermedienmatte (2) aus synthetischem Material ist.

5. Verfahren nach einem der Ansprüche 1 bis 4, vor dem Schritt c) einen Schritt ii) umfassend, der darin besteht, die geprägten Zonen (10) der ersten und der zweiten Reihe der Filtermedienmatte (2) lokal zu erwärmen.

6. Vorrichtung, die zur Herstellung eines Filterelements (19) bestimmt ist, wobei die Vorrichtung Folgendes umfasst
- eine Führungsvorrichtung, die konfiguriert ist, um eine Filtermedienmatte (2), die eine Vielzahl von Rillungen beinhaltet, in eine Vorschubrichtung zu führen,
- eine erste Quetschrolle (7a) und eine zweite Quetschrolle (7), die unabhängig und zur Vorschubrichtung querlaufend verschiebbar sind, wobei die erste Quetschrolle (7a) und die zweite Quetschrolle (7) jeweils konfiguriert sind, um eine erste Reihe von geprägten Zonen (10a) an der Kreuzungsstelle mit jeder zweiten Vorformlinie (6) zu bilden, und derart, dass die zweite Quetschrolle (7) eine zweite Reihe von geprägten Zonen (10) an jeder Vorformlinie (6) bildet, die eine geprägten Zone (10b) der ersten Reihe aufweist,
- ein erstes Abscheideorgan einer ersten Kleberraupe (14a) und ein zweites Abscheideorgan einer zweiten Kleberraupe (14b), die konfiguriert sind, um jeweils eine erste Kleberraupe (14a) auf mindestens die erste Reihe von geprägten Zonen (10) der Matte (2) und eine zweite Kleberraupe (14b) auf mindestens die zweite Reihe von geprägten Zonen (10) der Matte (2) abzuscheiden,
- mindestens eine Schnecke (15), die konfiguriert ist, um die Filtermedienmatte (2) entlang jeder Vorformlinie (6) zu falten,
- eine erste Kleberdüse (12a) und eine zweite Kleberdüse (12b), wobei die erste Kleberdüse (12a) und die zweite Kleberdüse (12b) unabhängig in einer zu der Vorschubrichtung der Matte (2) querlaufenden Richtung verschiebbar sind,
- eine Steuerungseinheit der ersten Quetschrolle (7a) und der zweiten Quetschrolle (7b), die konfiguriert ist, um unabhängig die querlaufende Verschiebung der ersten Quetschrolle (7a) und die querlaufende Verschiebung der zweiten Quetschrolle (7b) jeweils gemäß einem ersten Seitenprofil (17a) mindestens eines Filterelements (19) und einem zweiten Seitenprofil (17b) mindestens eines Filterelements (19) anzusteuern.

7. Vorrichtung nach Anspruch 6, weiter stromaufwärts der ersten und zweiten Quetschrolle (7a, 7b) in der Vorschubrichtung der Matte (2) zwei überlagerte Markierungswalzen (3) umfassend, die konfiguriert sind, um die Vielzahl von Vorformlinien (6) zu bilden.

8. Vorrichtung nach einem der Ansprüche 6 oder 7, weiter ein erstes Heizorgan und ein zweites Heizorgan umfassend, die stromaufwärts der ersten und zweiten Quetschrolle (7a, 7b) gemäß der Vorschubrichtung der Matte (2) angeordnet sind, wobei das erste Heizorgan und das zweite Heizorgan konfiguriert sind, um unabhängig und quer zur Vorschubrichtung verschiebbar zu sein, und um lokal die erste Reihe der geprägten Zonen (10a) und die zweite Reihe der geprägten Zonen (10b) jeweils gemäß dem ersten Seitenprofil (17a) und dem zweiten Seitenprofil (17b) zu erwärmen.

9. Vorrichtung nach einem der Ansprüche 6 bis 8, wobei die Steuerungseinheit konfiguriert ist, um die gleichzeitige Verschiebung des ersten und zweiten Heizorgans, der ersten und zweiten Quetschrolle (7a, 7b) und der ersten und zweiten Abscheidedüse (12) der ersten und zweiten Kleberraupe (14a, 14b) jeweils gemäß dem ersten Seitenprofil und dem zweiten Seitenprofil anzusteuern.

## Claims

1. A method for manufacturing filter elements (19) for an air filter, the method comprising the following steps of:
a) Guiding a sheet (2) of the filtering medium according to a direction of advance, the sheet (2) comprising two longitudinal edges and a plurality of preforming lines (6) transverse to the longitudinal edges,
b) Providing a first crushing roller (7a) and a second crushing roller (7) of the sheet (2), the first roller (7a) and the second roller (7b) being independently displaceable in a direction transverse to the direction of advance of the sheet (2) and,
c) Independently controlling the transverse displacement of the first crushing roller (7a) and the transverse displacement of the second crushing roller (7b) so that during the advance of the sheet (2), the first crushing roller (7a) forms a first series of embossed areas (10a) at the intersection with one preforming line (6) out of two and that the second crushing roller (7b) forms a second series of embossed areas (10b) on each preforming line (6) having an embossed area (10a) of the first series,
d) Providing a first glue nozzle (12a) and a second glue nozzle (12b), the first glue nozzle (12a) and the second glue nozzle (12b) being independently displaceable in a direction transverse to the direction of advance of the sheet (2),
e) Depositing over the sheet (2) of the filtering medium a first bead of glue (14a) connecting the embossed areas (10a) of the first series and a second bead of glue (14) connecting the embossed areas (10b) of the second series,
f) Folding the sheet (2) of the filtering medium along each of the preforming lines (6) so as to form a folded part (5) comprising alternately high folds and low folds, the successive high folds being joined by the first series of embossed areas (10a) forming a lateral profile (17) of at least one filter element (19) and by the second series of embossed areas (10b) and the succession of low folds respectively forming a first plane and a second plane parallel to the plane of the guided sheet (2) at step a),
g) Carrying out a separation cutting of the folded part (5) in a direction transverse to the direction of advance, to separate in a unitary manner the filter elements (19).

2. The manufacturing method according to claim 1, **characterized in that** the first crushing roller (7a) and the second crushing roller (7) are positioned on the same line transverse to the direction of advance of the sheet.

3. The manufacturing method according to any of claims 1 to 2, **characterized in that** the method comprises the step of carrying out a trimming cutting of the folded part (5) following the lateral profile (17) so as to trim at least one filter element (19).

4. The manufacturing method according to any of claims 1 to 3, wherein the sheet (2) of the filtering medium is made of a synthetic material.

5. The manufacturing method according to any of claims 1 to 4, comprising before step c) a step ii) consisting in locally heating the embossed areas (10) of the first and second series of the sheet (2) of the filtering medium.

6. A device intended for the manufacture of a filter element (19), the device comprising
- a guide device configured to guide a sheet (2) of the filtering medium including a plurality of creases according to a direction of advance,
- a first crushing roller (7a) and a second crushing roller (7) independently displaceable transversely to the direction of advance, the first crushing roller (7a) and the second crushing roller (7) being configured respectively to form a first series of embossed areas (10a) at the intersection with one preforming line (6) out of two and so that the second crushing roller (7) forms a second series of embossed areas (10) on each preforming line (6) having an embossed area (10b) of the first series,
- a first member for depositing a first bead of glue (14a) and a second member for depositing a second bead of glue (14b), configured to deposit respectively a first bead of glue (14a) at least over the first series of embossed areas (10) of the sheet (2) and a second bead of glue (14b) at least over the second series of embossed areas (10) of the sheet (2),
- at least one worm screw (15) configured to fold the sheet (2) of the filtering medium along each preforming line (6),
- a first glue nozzle (12a) and a second glue nozzle (12b), the first glue nozzle (12a) and the second glue nozzle (12b) being independently displaceable in a direction transverse to the direction of advance of the sheet (2),
- a unit for controlling the first crushing roller (7a) and the second crushing roller (7b) configured to independently pilot the transverse displacement of the first crushing roller (7a) and the transverse displacement of the second crushing roller (7b) respectively according to a first lateral profile (17a) of at least one filter element (19) and a second lateral profile (17b) of at least one filter element (19).

7. The device according to claim 6, further comprising upstream of the first and second crushing rollers (7a, 7b) in the direction of advance of the sheet (2), two superposed marking rolls (3) configured to form the plurality of preforming lines (6).

8. The device according to any of claims 6 or 7, further comprising a first heating member and a second heating member disposed upstream of the first and second crushing rollers (7a, 7b) according to the direction of advance of the sheet (2), the first heating member and the second heating member being configured to be independently displaceable transversely to the direction of advance and to locally heat the first series of embossed areas (10a) and the second series of embossed areas (10b) according to respectively the first lateral profile (17a) and the second lateral profile (17b).

9. The device according to any of claims 6 to 8 wherein the control unit is configured to pilot the simultaneous displacement of the first and second heating members, the first and second crushing rollers (7a, 7b) and the first and second nozzles (12) for depositing the first and second beads of glue (14a, 14b) according to respectively the first lateral profile and the second lateral profile.
